# EUROPÄISCHE PATENTANMELDUNG

(11) **EP 0 728 963 A1**
(43) Veröffentlichungstag der Anmeldung: **28.08.1996**
(21) Anmeldenummer: 96101854.6
(22) Anmeldetag: 08.02.1996
(51) Int. Cl.: F16H 57/02, F16H 37/04

(54) **Planetengetriebe mit feststehendem Hohlrad und Vorschaltgetriebe**

(30) Priorität: 22.02.1995 DE 29502981 U
(71) Anmelder: Getriebebau-NORD Schlicht + Küchenmeister GmbH & Co., D-22941 Bargteheide (DE)
(72) Erfinder: Hofmann, Edwin, Dipl.-Ing., D-23843 Bad Oldesloe (DE)
(74) Vertreter: Glawe, Delfs, Moll & Partner

(57) **Zusammenfassung**

Planetengetriebe (7) mit feststehendem Hohlrad (10) und einem antriebsseitigen Vorschaltgetriebe (17). Das Planetengetriebegehäuse (1) ist als ein das Planetengetriebe (7) und das Vorschaltgetriebegehäuse (14) einschließendes Blockgehäuse ausgebildet. Das Vorschaltgetriebe (17) ist ein Stirn-, Kegelrad- oder Schneckengetriebe.

## Beschreibung

Die Erfindung betrifft ein Planetengetriebe mit feststehendem Hohlrad und einem antriebsseitigem Vorschaltgetriebe sowie mit einen Planetengetriebegehäuse und einem das Vorschaltgetriebe vollständig aufnehmenden Vorschaltgetriebegehäuse.

Planetengetriebe haben den Vorteil eines geringen Volumen/Drehmoment-Verhältnisses und den Nachteil vergleichsweise hoher Kosten. Letzteres liegt großenteils daran, daß das Übersetzungsverhältnis nur durch Austausch des gesamten Radsatzes variierbar ist und daher eine aufwendige Lagerhaltung notwendig ist. Zum Erreichen großer Übersetzungsverhältnisse ist es erforderlich, mehrere Getriebesätze hintereinander anzuordnen, wobei die der letzten Stufe vorgeschalteten Getriebesätze im Stand der Technik gleichfalls als Planetengetriebe ausgeführt sind. Dies erscheint deshalb erforderlich, weil für die Auswahl des Planetengetriebes das geringe Volumen/Drehmoment-Verhältnis maßgebend ist und dieser Gesichtspunkt daher bei den vorgeschalteten Getrieben ebenso wie bei der letzten Getriebestufe zu beachten ist. Vorschaltgetriebe anderen Typs werden lediglich dann gewählt, wenn beispielsweise Winkelanordnung mit Kegel- oder Schneckengetriebe erforderlich ist.

Planetengetriebe haben ferner den Nachteil, daß Ihre Gehäuse eine vergleichsweise große Anzahl von drehmomentbelasteten, abzudichtenden Flanschverbindungen aufweisen, die im Hinblick auf die Abdichtung störungsanfällig sind, insbesondere bei Reversierbetrieb.

Der Erfindung liegt die Aufgabe zugrunde, ein Planetengetriebe der eingangs genannten Art zu schaffen, das unter Aufrechterhaltung des Vorteils eines günstigen Volumen/Drehmoment-Verhältnisses die Bildung einer fein abgestuften Getriebereihe mit geringerem Aufwand und/oder die Vermeidung störungsanfälliger Dichtfugen gestattet.

Die erfindungsgemäße Lösung besteht darin, daß das Planetengetriebegehäuse als ein das Planetengetriebe und das Vorschaltgetriebegehäuse einschließendes Blockgehäuse ausgebildet ist, wobei das Vorschaltgetriebe ein Stirn-, Kegelrad- oder Schnekkengetriebe ist.

Die Erfindung nimmt in Kauf, daß das Vorschaltgetriebe ein größeres Volumen/Drehmoment-Verhältnis als Planetengetriebe hat. Jedoch fällt dieser Nachteil wenig ins Gewicht, weil das Volumen der Vorschaltgetriebe aufgrund des geringeren zu übertragenden Drehmoments ohnehin vergleichsweise gering ist. Sie erreicht dadurch den Vorteil, daß sie für das Vorschaltgetriebe die große und unaufwendige Variabilität sowie die leichte Montierbarkeit der anderen Getriebetypen in Anspruch nehmen kann. Dadurch wird es möglich, eine hinreichend abgestufte Reihe von Getrieben anzubieten, die ein günstiges Volumen/Drehmoment-Verhältnis haben und dennoch mit wenigen Baugrößen von Planetengetrieben auskommen und dennoch unaufwendig sind. Dies gilt insbesondere bei der Wahl des Stirnradgetriebetyps für das Vorschaltgetriebe, das als solches in dem ihm zugeordneten, vollständigen Gehäuse automatisch vormontiert und als Ganzes in das Planeten-Bockgehäuse eingesetzt werden kann.

Dabei wird der weitere Vorteil erreicht, daß das Gehäuse - abgesehen von der Verbindung des Gehäuses mit einer Antriebseinrichtung, beispielsweise einem Flanschmotor - lediglich eine einzige abzudichtende Gehäusefuge aufweist, wobei diese lediglich einem relativ geringen Drehmoment ausgesetzt ist, nämlich nicht dem Abtriebsdrehmoment des Planetengetriebes.

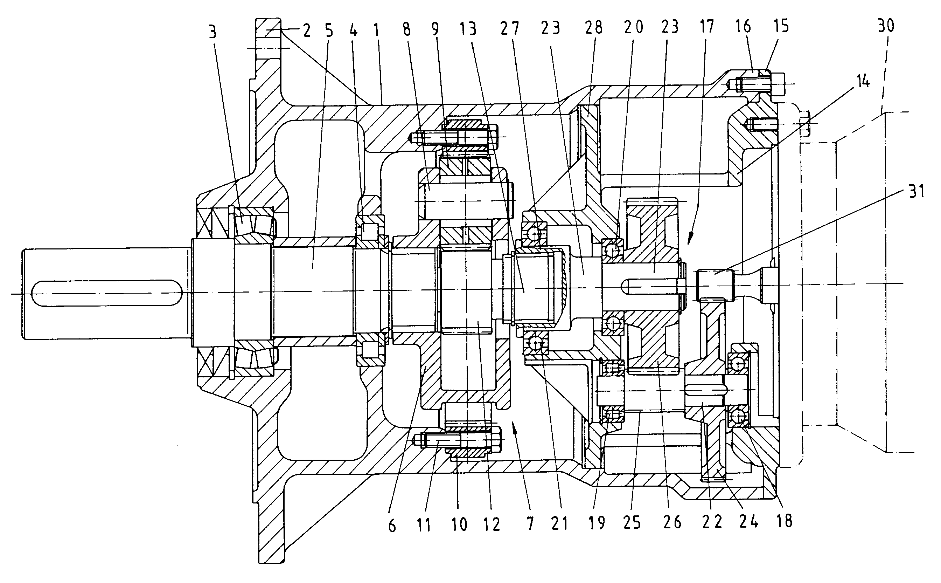

Die Erfindung wird näher unter Bezugnahme auf die Zeichnung erläutert, die ein Ausführungsbeispiels in einem Längsschnitt veranschaulicht. Das Getriebegehäuse 1, das mit einem Befestigungsflansch 2 ausgerüstet ist, aber auch mit Füßen oder dergleichen ausgebildet sein kann, bildet Lager 3, 4 für eine Abtriebswelle 5, die mit dem Planetenträger 6 des Planetengetriebes 7 drehfest verbunden ist. Der Planetenträger 6 trägt über Zapfen 8 eine Mehrzahl von Planetenrädern, von denen ein Planetenrad 9 in der Zeichnung erscheint. Die Planetenräder 9 kämmen auf der Außenseite mit dem Hohlrad 10, das im Gehäuse 1 zentriert und damit über Schrauben 11 drehfest verbunden ist. Auf der Innenseite kämmen sie mit dem Sonnenrad 12, das von den Planetenrädern 9 zentriert ist und dessen Antriebszapfen 13 zu der der Abtriebeswelle 5 abgelegenen Seite vorragt.

Das Gehäuse 1 ist als Blockgehäuse ausgebildet. Das besagt, daß es auf der Antriebsseite topfförmig zur Aufnahme eines weiteren Gehäuses 14 ausgebildet ist, dessen Flansch 15 mit dem Endflansch 16 des Blockgehäuses 1 dicht verschraubt ist und das das Vorschaltgetriebe 17 aufnimmt. Zu diesem Zweck bildet es eine Anzahl von Lagerstellen 18, 19 und 20, 21 für Getriebewellen 22, 23, die Zahnräder 24, 25, 26 tragen. Die Anordnung dieser Lagerstellen, Wellen und Zahnräder kann beliebig gewählt werden, wie es aus der Getriebetechnik bekannt ist. Wichtig ist, daß das Vorschaltgetriebegehäuse 14 das Vorschaltgetriebe gänzlich aufnimmt. Das heißt, daß das Vorschaltgetriebe 17 unabhängig vom Planetengetriebe 7 montiert und montagefertig vorrätig gehalten werden kann.

Die Abtriebswelle 23 des Vorschaltgetriebes ist zentrisch angeordnet, so daß sie in geeigneter Weise mit dem Antriebszapfen 13 des Planetengetriebes drehfest verbunden werden kann. Im dargestellten Beispiel weist der Antriebszapfen 13 eine Außenverzahnung auf und endet in der innenverzahnten Abtriebswelle 23, 27 des Vorschaltgetriebes.

Das Vorschaltgetriebegehäuse 14 ist einerseits bei den Flanschen 15, 16 und andererseits bei einem Flansch 28 im Blockgehäuse 1 zentriert, wobei der Flansch 28 nahe dem Planetengetriebe 7 angeordnet ist, im dargestellten Beispiel zwischen den Lagern 20, 21 der Abtriebswelle 23 des Vorschaltgetriebes.

Im dargestellten Beispiel ist vorgesehen, daß ein gestrichelt angedeuteter Antriebsmotor 30 an den Endflansch 15 des Vorschaltgetriebegehäuses 14 angeflanscht wird. An seine Stelle kann eine beliebige, andersartige Antriebseinrichtung treten. Auch kann die Verbindung zwischen Antriebseinrichtung und dem Vorschaltgetriebegehäuse 14 oder dem Blockgehäuse 1 in anderer Art ausgeführt sein, als es das Ausführungsbeispiel zeigt.

Im Ausführungsbeispiel ist vorgesehen, daß der Antriebsmotor 30 mit einem Ritzel 31 zentrisch in das Getriebegehäuse hineinragt, um mit dem Zahnrad 24 des Vorschaltgetriebes zusammenzuwirken. Dies ist vorteilhaft, aber nicht erforderlich.

Das Vorschaltgetriebegehäuse 14 umschließt das Vorschaltgetriebe 17 insofern vollständig, als das Getriebe darin vollständig gelagert ist. Es ist jedoch nicht erforderlich, daß das Vorschaltgetriebe 17 durch das Vorschaltgetriebegehäuse 14 vollständig von dem übrigen Raum im Blockgehäuse 1 abgeschlossen wird. Vielmehr kann zur Gewichtsersparnis und ggf. auch zur Erleichterung der Montage und Schmierung das Vorschaltgetriebegehäuse 14 durchbrochen ausgeführt sein.

Wird in einem Anwendungsfall ein anderes Vorschaltgetriebe gewählt, als es im Ausführungsbeispiel dargestellt ist, so können das Vorschaltgetriebe und das Vorschaltgetriebegehäuse in ihren Einzelheiten weitgehend von dem Ausführungsbeispiel abweichen. Lediglich diejenigen Konstruktionsmerkmale des Ausführungsbeispiels bleiben auch bei dem abgewandelten Vorschaltgetriebe erhalten, die für das Zusammenwirken mit dem Blockgehäuse 1 und dem Planetengetriebe 7 maßgebend sind, nämlich die Zentrier-, Dichtungs- und Verbindungseinrichtung sowie die zur Verbindung mit dem Antriebszapfen 13 des Planetengetriebes vorgesehene Kupplungseinrichtung 27.

Man erkennt bei der Prüfung des Ausführungsbeispiels, daß ein günstiges Volumen/Drehmoment-Verhältnis erreicht wird, weil in der letzten Stufe ein Planetenradgetriebe verwendet wird; daß die Variabilität dank der Ausführung des Vorschaltgetriebes 17 als Stirnradgetriebe außerordentlich groß ist; daß das Vorschaltgetriebe leicht (auch automatisch) montierbar ist und in verschiedenen Ausführungen montagefertig vorrätig gehalten weren kann, und daß infolge der topfartig übergreifenden Ausführung des Gehäuses 1 die sonst bei mehrstufigen Planetengetrieben anzutreffende Häufung von Dichtfugen und Abdichtungsproblemen entfällt.

## Patentansprüche

1. Planetengetriebe mit feststehendem Hohlrad (10) und einem antriebsseitigen Vorschaltgetriebe (17) sowie mit einem Planetengetriebegehäuse (1) und einem das Vorschaltgetriebe vollständig aufnehmenden Vorschaltgetriebegehäuse (14), dadurch gekennzeichnet, daß das Planetengetriebegehäuse (1) als ein das Planetengetriebe (7) und das Vorschaltgetriebegehäuse (14) einschließenden Blockgehäuse ausgebildet ist, wobei das Vorschaltgetriebe (17) ein Stirn-, Kegelrad- oder Schneckengetriebe ist.

2. Planetengetriebe nach Anspruch 1, dadurch gekennzeichnet, daß das Vorschaltgetriebegehäuse (14) von dem Blockgetriebegehäuse (1) bis zu einem antriebsseitigen Flansch (15) des Vorschaltgetriebegehäuses (14) eingeschlossen ist.

3. Planetengetriebe nach Anspruch 2, dadurch gekennzeichnet, daß der antriebsseitige Flansch (5) des Vorschaltgetriebegehäuses (14) den Anschlußflansch für eine Antriebseinrichtung (30) bildet.

4. Planetengetriebesystem bestehend aus Planetengetrieben mit abgestuften Leistungsdaten, dadurch gekennzeichnet, daß es von einem Planetengetriebe (7) nach einem der Ansprüche 1 bis 3 und unterschiedlich abgestuften Vorschaltgetrieben (17) anderen Typs besteht, deren Gehäuse (14) hinsichtlich ihrer für die Verbindung mit dem Blockgetriebegehäuse (1) maßgebenden Eigenschaften übereinstimmen.
